# EUROPÄISCHE PATENTSCHRIFT

(11) **EP 2 683 969 B1**
(45) Veröffentlichungstag und Bekanntmachung des Hinweises auf die Patenterteilung: **20.09.2017**
(21) Anmeldenummer: 12714933.4
(22) Anmeldetag: 29.02.2012
(51) Int. Cl.: F16J 15/34

(54) **GLEITRINGDICHTUNG**
SLIDE RING SEAL
JOINT À BAGUE GLISSANTE

(30) Priorität: 08.03.2011 DE 102011013366
(43) Veröffentlichungstag der Anmeldung: 15.01.2014
(73) Patentinhaber: Federal-Mogul Burscheid GmbH, 51399 Burscheid (DE)
(72) Erfinder: DENGLER, Andreas, 86316 Friedberg (DE)
(74) Vertreter: Döpp, Ludger
(86) Internationale Anmeldenummer: PCT/DE2012/000211
(87) Internationale Veröffentlichungsnummer: WO 2012/119579

(56) Entgegenhaltungen:
- EP-A1- 1 300 616
- DE-A1- 10 104 788
- DE-U1- 29 823 662
- US-A1- 2011 048 810

## Beschreibung

Die Erfindung betrifft eine Gleitringdichtung, insbesondere eine Laufwerkdichtung, gemäß gattungsbildendem Teil des ersten Patentanspruchs.
Laufwerkdichtungen mit Gummitrapezringen besitzen aufgrund der geringen erzeugten Kräfte durch das Elastomerteil nur geringe Haltemomente zwischen dem Elastomerteil und dem Gleit- und/oder Gegenring. Bereits durch mittelmäßige Schmutzangriffe von außen, welche die Verdrehkräfte erhöhen, kann ein Verdrehen zwischen dem Elastomerteil und dem Gleit- und/oder Gegenring erzeugt werden.

Durch erhöhte Belastungen, z.B. durch Schmutzeintrag und Korrosionsangriffe, kann ein erhöhtes Verdrehmoment zwischen dem Gleit- und/oder Gegenring und dem Elastomerteil resultieren. Eine Relativbewegung zwischen den Gleit- und/oder Gegenringen und dem Elastomerteil bewirken Elastomerverschleiß und daraus folgend Dichtungsversagen.

Eine gattungsgemäße Gleitringdichtung mit radialer Verdrehsicherung ist der DE 101 04 788 A1 zu entnehmen. Die bisherigen Verdrehsicherungen zeigen nur mangelhaften Schutz, da die Verdrehsicherung relativ weit vom hochbelasteten und somit wenig verformten Bereich des Dichtkörpers entfernt ist. Die grundsätzliche Verformung des Dichtkörpers im Einbauzustand kann zu einem Abheben des hinteren Bereichs des Elastomerteils und somit auch zum Ausheben der Verdrehsicherung aus der Aussparung des Gleit- und/oder Gegenrings führen. Sofern der Gleit- und/oder Gegenring anfängt sich zu verdrehen, führt die geringe Steifigkeit des Gleit- und/oder Gegenrings zur Deformation der Verdrehsicherung und somit zum vollständigen Verlust des Formschlusses und damit zum Wirkungsverlust der Gleitringdichtung.

Der Gleit- und/oder Gegenring besitzt einen hoch belasteten Bereich, der durch den Übergangsbereich zwischen dem Axial- in den Radialschenkel des Gleit- und/oder Gegenringes gebildet wird. Je weiter die vom hochbelasteten Bereich entfernte Verdrehsicherung zwischen dem Gleit- und/oder Gegenring und dem Elastomerteil angeordnet ist, kann eine elastische Verformung der Verdrehsicherung bewirken, bei welcher der Formschluss und somit die Verdrehsicherung nicht mehr sichergestellt ist. Die Erfindung liegt die Aufgabe zugrunde, ausgehend vom Stand der Technik gemäß DE 101 04 788 A1, eine Gleitringdichtung, insbesondere eine Laufwerkdichtung bereitzustellen, die mit einer optimierten Verdrehsicherung versehen ist.

Diese Aufgabe wird dadurch gelöst, dass der außerhalb der Gleitfläche vorgesehene Übergangsbereich vom Axial- in den Radialschenkel des Gleit- und/oder Gegenrings mit einer Profilierung versehen ist, in welche ein etwa korrespondierend ausgebildeter Abschnitt des Dichtkörpers eingreift, wobei die Profilierung durch mindestens einen umlaufend ausgebildeten Ansatz gebildet wird. Vorteilhafte Weiterbildungen des Erfindungsgegenstandes sind den Unteransprüchen zu entnehmen.

Durch den mindestens einen absatzartig ausgebildeten Übergangsbereich vom Axial- in den Radialschenkel des Gleit- und/oder Gegenrings wird die aus dem Stand der Technik bekannte Verdrehsicherung näher an den hochbelasteten Bereich des jeweiligen Gleit- und/oder Gegenrings gebracht und macht somit ein Ausweichen der Verdrehsicherung durch elastische Verformung unmöglich. Infolge der massiven Geometrie der Verdrehsicherung werden auch hohe Kräfte durch den Formschluss aufgenommen und führen zu keinem Abscheren des Elastomermaterials.

Von Vorteil ist, den Übergangsbereich vom Radial- in den Axialschenkel gerundet auszubilden, so dass zwischen den jeweiligen Übergangsbereichen eine, bedarfsweise gerundet ausgebildete Kante gebildet wird.

Einem weiteren Gedanken der Erfindung gemäß läuft der einzelne bzw. der letzte Absatz in ebenfalls gerundeter Form in den Axialschenkel des Gleit- und/oder Gegenrings ein.

Ähnlich wie beim Stand der Technik können auch hier, in Umfangsrichtung des Gleit- und/oder Gegenrings gesehen, am äußeren Ende des jeweiligen axialen Schenkels mehrere Ausnehmungen eingebracht werden, in welche, Verdrehsicherungen bildende, Ansätze des Dichtkörpers eingreifen.

Der Erfindungsgegenstand ist anhand eines Ausführungsbeispiels in der Zeichnung dargestellt und wird wie folgt beschrieben. Es zeigen:
- Figur 1: Prinzipskizze eines erfindungsgemäßen Gleit- und/oder Gegenrings einer nicht weiter dargestellten Laufwerkdichtung im Querschnitt;
- Figur 2: Laufwerkdichtung, einerseits gemäß Stand der Technik und andererseits gemäß Erfindung, in perspektivischer Darstellung sowie im Teilschnitt.

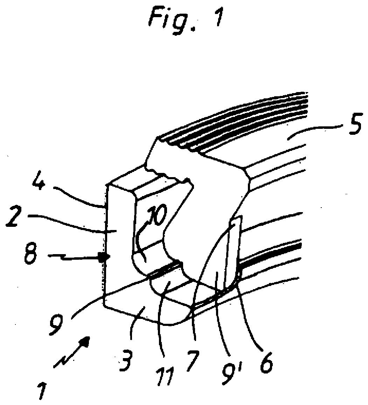

Figur 1 zeigt einen Gleit- und/oder Gegenring 1 einer hier nicht weiter dargestellten Laufwerkdichtung. Der im Folgenden als Gleitring bezeichnete Gleit- und/oder Gegenring 1 beinhaltet einen Radialschenkel 2 sowie einen Axialschenkel 3. Radialschenkelseitig ist eine Gleitfläche 4 vorgesehen. Der Axialschenkel 3 nimmt einen als trapezförmigen Dichtkörper ausgebildeten Elastomerkörper 5 auf.

Das freie Ende des Axialschenkels 3 ist mit, in Umfangsrichtung gesehen, Verdrehsicherungen bildenden, Ausnehmungen 6 versehen, in welche etwa korrespondierend ausgebildete Ansätze 7 des Dichtkörpers 5 eingreifen.

Abweichend zum Stand der Technik wird die jeweilige Verdrehsicherung durch entsprechende Formgestaltung der Ansätze 7 in die Nähe des hochbelasteten Kontaktbereichs 8, d.h. in Richtung des Übergangsbereichs vom Radialschenkel 2 in den Axialschenkel 3, verlegt. Zu dem Zweck wird der Übergangsbereich zwischen dem Radialschenkel 2 und dem Axialschenkel 3 mit einer Profilierung 9 versehen, die in diesem Beispiel als einstufiger Absatz ausgebildet ist. Der Übergang vom Radialschenkel 2 in den Absatz 9 ist mit einer Rundung 10 vorgebbarer Kurvengeometrie ausgeführt. Gleiches gilt für den Übergang des Absatzes 9 in den Axialschenkel 3, wobei auch hier eine Rundung 11 vorgebbarer geometrischer Kontur vorgesehen ist. Der Dichtkörper 5 verfügt über einen der Profilierung 9 entsprechenden Abschnitt 9', mit welchem er sich auf der Profilierung 9 abstützt.

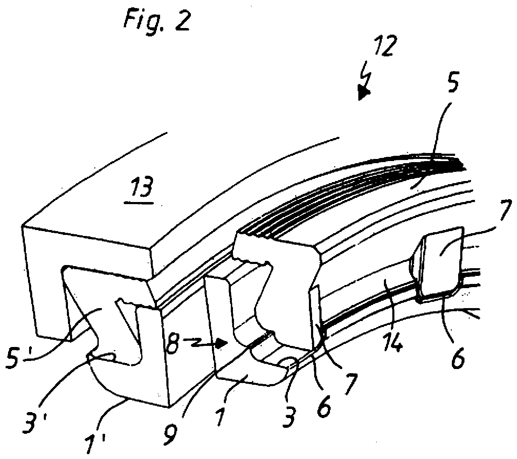

Figur 2 zeigt eine Gleitringdichtung 12 in perspektivischer Darstellung sowie in aufgeschnittener Form. Die Gleitringdichtung 12 beinhaltet einen Gleitring 1 sowie einen, dem Stand der Technik zuzuordnenden Gegenring 1'. Zum Einsatz gelangen elastomere Dichtkörper 5,5', die sich zwischen dem jeweiligen Axialschenkel 3,3' und korrespondierenden Gehäuseteilen 13 abstützen. Der gegenringseitige Bereich der Gleitringdichtung 12 beinhaltet einen Gegenring 1 mit nicht näher dargestellter Verdrehsicherung. Der Gleitring 1 gemäß Erfindungsgegenstand offenbart die bereits in Figur 1 angedeutete Profilierung 9, wobei die Ausnehmungen 6 im Axialschenkel 3 gut erkennbar sind. In diese Ausnehmungen 6 greifen die verstärkten Ansätze 7 des Dichtkörpers 5 ein. Wie dem Querschnitt des rechten Bildes der Gleitringdichtung 12 zu entnehmen ist, wird die Verdrehsicherung zwischen dem Gleitring 1 und dem Dichtkörper 5 gegenüber dem Stand der Technik dadurch verbessert, dass die Lage der Verdrehsicherung nahe an den hochbelasteten Kontaktbereich 8 zwischen Dichtkörper 5 und Profilierung 9 herangeführt wird und somit im Bereich geringer Verformungen des Elastomermaterials liegt. Ein Abheben oder eine Verformung der Verdrehsicherung, die zu einem Formschlussverlust führen könnte, ist praktisch ausgeschlossen. Zwischen einzelnen, Verdrehsicherungen bildenden, Ansätzen 7 des Dichtkörpers 5 erstreckt sich Elastomermaterial 14, das zumindest auf dem der Verdrehsicherung zugewandten Abschnitt des Axialschenkels 3 abgestützt ist.

Mit dem Erfindungsgegenstand wird eine sehr massive Ausführung der Verdrehsicherung herbeigeführt, um auch hohe Verdrehkräfte aufnehmen zu können. In Abhängigkeit der aufzunehmenden Verdrehkräfte wird die Anzahl der Ansätze 7 am Dichtkörper 5, respektive der Ausnehmungen 6 am Axialschenkel 3 des Gleitrings 1, vorgesehen.

## Patentansprüche

1. Gleitringdichtung, zumindest bestehend aus einem winkelförmigen Gleit- und/oder Gegenring (1), dessen radialer Schenkel (2) mit einer Gleitfläche (4) versehen ist und dessen axialer Schenkel (3) eine Aufnahme für einen trapezförmig ausgebildeten Dichtkörper (5) bildet, wobei das dem Radialschenkel (2) zugewandte Ende des axialen Schenkels (3) Ausnehmungen (6) aufweist, in welche am Dichtkörper (5) angeformte, Verdrehsicherungen bildende, Ansätze (7) eingreifen, **dadurch gekennzeichnet, dass** der außerhalb der Gleitfläche (4) vorgesehene Übergangsbereich (8) vom Axial- (3) in den Radialschenkel (2) des Gleit- und/oder Gegenrings (1) mit einer Profilierung (9) versehen ist, in welche ein, etwa korrespondierend ausgebildeter Abschnitt (9') des Dichtkörpers (5) eingreift, wobei die Profilierung (9) durch mindestens einen umlaufend ausgebildeten Absatz gebildet ist.

2. Gleitringdichtung nach Anspruch 1, **dadurch gekennzeichnet, dass** der Übergangsbereich (8) vom Radial- (2) in den Axialschenkel (3) gerundet (10) ausgebildet ist und axialschenkelseitig in den Absatz (9) übergeht.

3. Gleitringdichtung nach Anspruch 1 oder 2, **dadurch gekennzeichnet, dass** der Absatz (9) in gerundeter Form (10) in den Axialschenkel (3) einläuft.

4. Gleitringdichtung nach einem der Ansprüche 1 bis 3, **gekennzeichnet durch** eine Mehrzahl von, in Umfangsrichtung gesehen, Verdrehsicherungen bildenden, Ansätzen (7) am Dichtkörper (5), die in korrespondierende Ausnehmungen (6) des Axialschenkels (3) eingreifen.

5. Gleitringdichtung nach einem der Ansprüche 1 bis 4, **dadurch gekennzeichnet, dass**, in Umfangsrichtung gesehen, zwischen einzelnen Ansätzen (7) Elastomermaterial vorgesehen ist, das zumindest auf dem in Richtung der Verdrehsicherung verlaufenden Abschnitt des Axialschenkels (3) abgestützt ist.

## Claims

1. A slide ring seal, consisting of at least one angular slide and/or counter-ring, the radial leg (2) of which is provided with a sliding surface (4) and the axial leg (3) of which forms a receiver for a trapezoidal-shaped sealing body (5), wherein the end of the axial leg (3), which is facing the radial leg (2), comprises recesses (6), in which engage projections (7) which are formed on the sealing body (5) and which form anti-rotation devices, **characterized in that** the transition zone (8) between the axial leg (3) and the radial leg (2) of the slide and/or counter-ring (1), which transition zone is provided outside the sliding surface (4), is provided with a profiling (9), in which engages a section (9') of the sealing body (5), which section is designed in an approximately corresponding manner, wherein the profiling (9) is formed by at least one shoulder that is designed in a circumferential manner.

2. A slide ring seal according to claim 1, **characterized in that** the transition zone (8) between the radial leg (2) and the axial leg (3) is designed in a rounded manner (10) and extends, on the side of the axial leg, into the shoulder (9).

3. A slide ring seal according to claim 1 or 2, **characterized in that** the shoulder (9) in rounded form (10) extends into the axial leg (3).

4. A slide ring seal according to one of the claims 1 through 3, **characterized by** a plurality of projections (7) on the sealing body (5), which projections, seen in the circumferential direction, form anti-rotation devices and engage into corresponding recesses (6) of the axial leg (3).

5. A slide ring seal according to one of the claims 1 through 4, **characterized in that**, seen in circumferential direction, elastomer material is provided between the individual projections (7), which elastomer material rests at least upon the section of the axial leg (3) which extends in the direction of the anti-rotation device.

## Revendications

1. Garniture mécanique d'étanchéité constituée d'une bague glissante angulaire et/ou d'une contre-bague angulaire (1), dont la branche radiale (2) est munie d'une surface glissante (4), et dont la branche axiale (3) forme un logement pour un corps d'étanchéité (5) de forme trapézoïdale, l'extrémité de la branche axiale (3), qui fait face à la branche radiale (2), comprenant des évidements (6), dans lesquels s'engagent des saillies (7), qui sont formées sur le corps d'étanchéité (5) et qui forment des dispositifs anti-rotation, **caractérisée en ce que** la zone de transition (8) entre la branche axiale (3) et la branche radiale (2) de la bague glissante et/ou de la contre-bague (1), laquelle zone de transition est prévue à l'extérieur de la surface glissante (4), est munie d'un profilage (9), dans lequel s'engage une section (9') du corps d'étanchéité (5), la section étant conçue de manière approximativement correspondante, le profilage (9) étant formé par au moins un épaulement circonférentiel.

2. Garniture mécanique d'étanchéité selon la revendication 1, **caractérisée en ce que** la zone de transition (8) entre la branche radiale (2) et la branche axiale (3) est arrondie et s'étend du côté de la branche axiale dans l'épaulement (9).

3. Garniture mécanique d'étanchéité selon la revendication 1 ou la revendication 2, **caractérisée en ce que** l'épaulement (9) en forme arrondie (10) s'étend dans la branche axiale (3).

4. Garniture mécanique d'étanchéité selon l'une des revendications 1 à 3, **caractérisée par** une pluralité de saillies (7) sur le corps d'étanchéité (5), lesquelles saillies forment, vues dans la direction circonférentielle, des dispositifs anti-rotation, et s'engagent dans des évidements (6) correspondants de la branche axiale (3).

5. Garniture mécanique d'étanchéité selon l'une des revendications 1 à 4, **caractérisée en ce que**, vu dans la direction circonférentielle, une matière élastomère est prévue entre les saillies individuelles (7), laquelle matière élastomère s'appuie au moins sur la partie de la branche axiale (3), qui s'étend dans la direction du dispositif anti-rotation.
